Europäisches Patentamt

European Patent Office

Office européen des brevets

(19)

(11) Numéro de publication: **0 084 486**
**A1**

(12) **DEMANDE DE BREVET EUROPEEN**

(21) Numéro de dépôt: **83400067.1**

(22) Date de dépôt: **12.01.83**

(51) Int. Cl.³: **A 01 M 21/04**

(30) Priorité: **18.01.82 FR 8200657**

(43) Date de publication de la demande:
**27.07.83 Bulletin 83/30**

(84) Etats contractants désignés:
**AT BE CH DE FR GB IT LI LU NL SE**

(71) Demandeur: **TECNOMA**
**54 rue de l'Electricité**
**F-51206 Epernay(FR)**

(72) Inventeur: **Ballu, Patrick, Jean-Marie**
**4, Rue de l'Isle**
**F-51100 Reims(FR)**

(74) Mandataire: **De Boisse, Louis**
**37, Avenue Franklin D. Roosevelt**
**F-75008 Paris(FR)**

(54) Appareil pour l'application d'un liquide de traitement des plantes.

(57) L'invention concerne un appareil pour l'application manuelle d'un liquide de traitement des plantes.

Cet appareil comporte une canne creuse (A-B), remplie partiellement de liquide; son extrémité inférieure est munie de pattes (10a), qui permettent de l'appliquer sur le sol (S), au-dessus de la plante à traiter (P); le pommeau (p) permet de commander manuellement le dosage d'une quantité déterminée de liquide, par exemple au moyen d'une pompe (11-12), et l'éjection de cette quantité de liquide par un clapet (5-6), situé au-dessus de la plante (P).

Cet appareil permet par exemple de projeter un désherbant sur une plante à détruire, sans nuire aux plantes utiles qui l'entourent.

EP 0 084 486 A1

./...

Croydon Printing Company Ltd.

FIG.:1

0084486

- 1 -

<u>Appareil pour l'application d'un liquide de traitement des plantes.</u>

La présente invention concerne un appareil pour l'application manuelle et localisée d'un liquide de traitement des plantes, par exemple un désherbant, un engrais liquide ... etc.

Le brevet canadien N° 908.107, déposé le 23 Avril 1970 par EDWARD C.BROWN, décrit un appareil pour l'application manuelle et localisée d'un liquide de traitement des plantes. Cet appareil comporte un réservoir d'herbicide liquide sous pression,qui est fixé latéralement à l'extrémité inférieure d'une canne, et qui est muni,à son extrémité inférieure,d'un organe d'appui sur le sol, par rapport auquel le réservoir, ainsi qu'un dispositif de dosage et d'éjection, peuvent coulisser verticalement lorsqu'une poussée descendante est exercée manuellement sur l'extrémité supérieure de la canne. Le dispositif de dosage de l'herbicide comprend une chambre de dosage de volume fixe, que le liquide sous pression vient remplir spontanément lorsque le coulissement vertical mentionné établit une communication entre cette chambre de dosage et le réservoir de liquide de traitement. Cet appareil offre évidemment l'inconvénient de nécessiter l'emploi d'un réservoir de liquide sous pression, qui doit être jeté lorsqu'il est vide, et remplacé par un réservoir plein, d'où résulte une dépense importante.

Le Certificat d'Utilité français N° 76.35201, déposé le 23 Novembre 1976 par la Société WILHELM KELLER K.G., décrit également un appareil pour le traitement des plantes en pleine terre. Cet appareil comporte une canne creuse, servant de réservoir d'herbicide liquide, et muni, à son extrémité inférieure, d'une chambre de dosage, de volume fixe. Lorsque l'extrémité inférieure d'un poussoir coulissant est posée sur la plante à traiter, c'est le poids de l'appareil lui-même qui provoque l'ouverture du clapet porté par ce poussoir, et la vidange de la chambre de dosage, ledit clapet étant refermé par un ressort lorsque l'appareil est ensuite soulevé au-dessus du sol. Bien entendu, le liquide s'écoule hors de la chambre de dosage par gravité, sans être soumis à aucune pression, si bien qu'il n'y a pas formation d'un jet de liquide, produisant un traitement localisé de la plante.

La demande de brevet allemand N° 2.807.956, déposée le 24 Février 1978 par la Société WILHELM KELLER GmbH & Co K.G. décrit différentes variantes de l'appareil selon le Certificat d'Utilité français précédemment mentionné. Ces diverses variantes ne comportent pas non plus d'organe d'appui sur le sol, à l'exception d'un poussoir, destiné à produire l'ouverture de l'orifice inférieur de la chambre de dosage. C'est encore le poids de l'appareil qui provoque l'ouverture du clapet, lequel ne nécessite donc pas de recevoir une poussée descendante sur son extrémité supérieure. Dans ce cas encore, il n'y a pas formation d'un jet de liquide de traitement, dirigé de façon précise vers la plante à traiter.

L'un des buts principaux de la présente invention est de réaliser un appareil pour l'application manuelle et localisée d'un liquide de traitement des plantes,
par exemple d'un désherbant, cet appareil produisant
un jet de liquide dirigé avec précision vers la plante
à traiter.

L'appareil selon la présente invention comporte, de
façon connue en soi, un canne portant un réservoir de liquide, et munie, à son extrémité inférieure, d'un orifice
d'éjection, ainsi que d'un organe d'appui sur le sol,
grâce auquel ledit orifice peut être placé au-dessus
de la plante à traiter, ainsi qu'un dispositif placé en
amont dudit orifice, pour doser et éjecter un volume
déterminé de liquide chaque fois qu'une poussée descendante est exercée manuellement sur le pommeau de ladite
canne. L'appareil selon la présente invention est caractérisé
en ce que le réservoir de liquide est constitué par au
moins une partie creuse de la canne, que le dispositif
pour doser un volume déterminé du liquide comporte
une pompe à piston, dont la cylindrée est sensiblement
égale au volume de liquide à doser, le piston de ladite pompe étant accouplé avec le pommeau de la canne de façon
que chaque poussée descendante sur ledit pommeau produise
une course de refoulement complète dudit piston, et
que des moyens élastiques sont prévus pour commander
la course de retour du piston.

L'utilisateur de l'appareil selon la présente invention
peut donc projeter un jet, bien localisé, de liquide
de traitement sur une plante, simplement en exerçant
une poussée descendante sur le pommeau de la
canne, laquelle peut avoir une longueur suffisante
pour éviter à l'utilisateur d'avoir à se baisser. Ce
fonctionnement avantageux de l'appareil selon la présente
invention est obtenu sans qu'il soit nécessaire d'utiliser
un liquide de traitement, par exemple un désherbant,
renfermé sous pression dans un réservoir étanche, qui devrait être jeté après usage.

Dans une forme de réalisation particulièrement avantageuse de l'appareil selon la présente invention, des moyens sont prévus pour ajuster la cylindrée de la pompe, et en particulier la course de refoulement de son piston; pour cela, par exemple, le cylindre de la pompe, ou le support de son cylindre, est monté de façon à pouvoir être ajusté axialement par rapport à la position de repos, fixe, de son piston. Cette disposition est particulièrement avantageuse dans la mesure où elle permet d'adapter le volume de désherbant qui est projeté à chaque actionnement de l'appareil, au type de désherbant utilisé, ainsi éventuellement qu'à la surface de la plante à traiter.

Dans une forme de réalisation préférée de l'appareil selon la présente invention, le cylindre de la pompe, qui est monté coaxialement à l'intérieur de la canne creuse, en-dessous de son réservoir supérieur de liquide, débouche, par une ouverture inférieure, dans une chambre, qui est aménagée dans la partie inférieure de ladite canne, et qui alimente l'orifice d'éjection, contrôlé lui-même par un obturateur, muni d'un ressort de fermeture. Cette disposition est particulièrement avantageuse dans la mesure où l'obturateur à ressort, qui s'ouvre automatiquement pendant la course de refoulement du piston de la pompe, peut être aisément aménagé pour produire un jet régulier de liquide de traitement.

Selon une autre caractéristique avantageuse de l'appareil suivant la présente invention, l'organe d'appui dont est munie l'extrémité inférieure de la canne est ajouré pour faciliter la mise en place de ladite canne au-dessus de la plante à traiter; par exemple, l'organe d'appui est formé par deux, trois ou quatre pattes, disposées régulièrement à l'extrémité inférieure de la canne, ou encore par un tronc de cône ajouré, par exemple en fil de fer.

L'accouplement du piston de la pompe avec le pommeau de la canne peut être réalisé de l'une des deux façons suivantes, également avantageuses :

Dans une première réalisation, le pommeau, rigide, de la canne creuse, est accouplé avec le piston de la pompe de dosage, par un tube, par exemple en matériau transparent, qui constitue le réservoir de liquide, et dont la partie inférieure est montée coulissante, avec étanchéité, dans la partie inférieure de la canne creuse; des moyens élastiques sont en outre prévus pour maintenir normalement le tube creux dans sa position d'extension maximale au-dessus de la partie inférieure de la canne, même lorsque ledit tube est rempli de liquide. Dans ce cas, le pommeau rigide peut avantageusement former un bouchon pour une ouverture de remplissage du réservoir tubulaire, et comporter aussi, éventuellement, un orifice de prise d'air; par exemple, le pommeau peut être formé par deux hémisphères creux, dont l'un communique avec l'ouverture supérieure du réservoir tubulaire, tandis que l'autre hémisphère est vissé ou encliqueté sur le premier.

Dans la seconde réalisation, le pommeau, souple, de la canne creuse, ou tout au moins sa calotte supérieure, souple, permet, par sa déformation manuelle, de pousser vers le bas une tige, disposée suivant l'axe de ladite canne, et accouplée par son extrémité inférieure avec le piston de la pompe; des moyens élastiques sont en outre prévus pour maintenir normalement la tige axiale dans sa position supérieure.

A titre d'exemples, on a décrit ci-dessous et illustré schématiquement au dessin annexé, plusieurs formes de réalisation de l'appareil selon la présente invention.

La figure 1 est une vue d'une première forme de réalisation de l'appareil posé sur le sol, au-dessus d'une plante à traiter, cette vue étant une coupe par un plan vertical passant par l'axe de la canne creuse.

Les figures 2 à 4 sont des vues en coupe respectivement suivant les lignes II-II, III-III et IV-IV de la figure 1.

La figure 5 est une vue partielle, en coupe analogue à celle de la figure 1, d'une première variante, permettant d'ajuster le volume de liquide éjecté sur la plante à chaque actionnement de l'appareil.

La figure 6 est une vue, analogue à la figure 1, d'une seconde forme de réalisation.

La figure 7 est une vue, analogue à la figure 1, d'une troisième forme de réalisation.

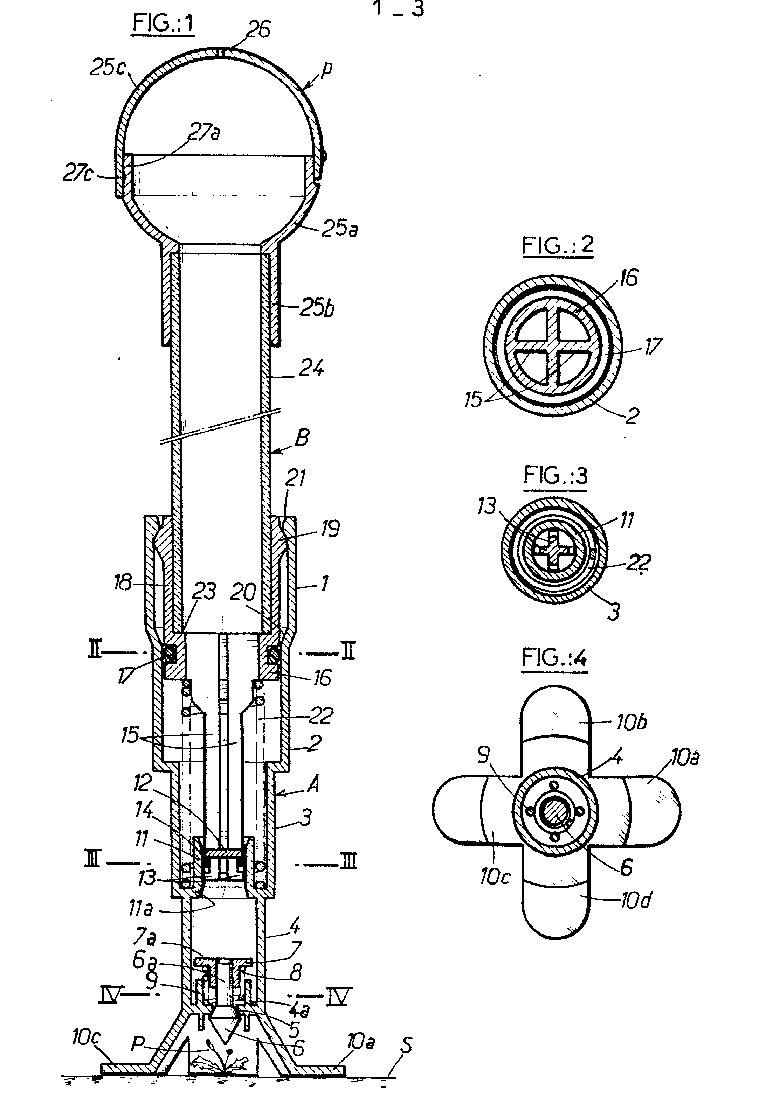

La forme de réalisation de l'invention qui est illustrée schématiquement sur les figures 1 à 4 a essentiellement la forme d'une canne télescopique en deux parties : la partie inférieure, A, est par exemple une pièce tubulaire en matière moulée, par exemple en métal, en alliage ou en matière synthétique, comportant quatre étages cylindriques superposés, 1 à 4, dont la section va en décroissant de l'étage supérieur 1 à l'étage inférieur 4. La paroi inférieure, 4a, de ce dernier, est traversée, de préférence en son centre, par un orifice d'échappement 5, qui forme un siège pour le corps 6 d'un obturateur, placé en-dessous de ladite paroi 4a. Le corps 6 de l'obturateur est prolongé, à travers l'orifice du siège 5, et à l'intérieur de la chambre délimitée par l'étage 4, par une tige 6a, solidarisée, par tous moyens appropriés, avec une bague 7, pourvue d'une bride radiale 7a ; un ressort hélicoïdal cylindrique, 8, est comprimé entre la bride 7a de la bague 7 et la partie de la paroi 4a qui encadre le siège 5, de manière à assurer l'application du corps 6 de l'obturateur contre ledit siège 5. Des butées 9, solidaires de la paroi 4a, limitent les mouvements de descente de la bague 7 et de l'obturateur 6 dont elle est solidaire, qui ont lieu lorsqu'une surpression est créée dans la chambre 4, de la façon qui sera précisée ultérieurement.

Comme visible sur les figures 1 et 4, l'extrémité inférieure 4 de la partie A de la canne est solidaire des extrémités supérieures de quatre pattes, 10a à 10d, par lesquelles ladite partie inférieure A de la canne peut être appliquée sur le sol S (figure 1) de manière que l'orifice d'éjection 5 et l'obturateur 6 se trouvent exactement au-dessus de la plante à traiter, P.

Dans la chambre délimitée par l'étage 3 est montée une pompe à piston constituée de la façon suivante : son cylindre est formé par une douille 11, dont le bord circulaire inférieur est solidarisé, par exemple soudé, au bord circulaire d'une ouverture 11a, faisant communiquer les

chambres 3 et 4, tandis que l'extrémité supérieure de la douille cylindrique 11 est librement ouverte dans ladite chambre 3. Dans l'exemple de réalisation considéré, le piston de la pompe est constitué par un disque 12, dont la course de refoulement vers le bas, à l'intérieur de la douille cylindrique 11, est déterminée avec précision de manière que la cylindrée de la pompe soit égale au volume déterminé de liquide qui doit être éjecté sur la plante P à chaque ouverture de l'obturateur 6, comme on le décrira ultérieurement. Ce volume est de préférence d'une fraction de centimètre cube. Le disque 12 est par exemple moulé d'une seule pièce avec quatre ergots, 13 (voir aussi la figure 3), qui s'étendent en dessous de la face inférieure du disque 12, en ménageant un espace annulaire, dans lequel est engagé un joint torique 14, d'épaisseur inférieure à la hauteur dudit espace. Ce joint torique 14 est ainsi monté flottant en dessous du piston 12, entre une position supérieure, représentée sur la figure 1, dans laquelle ledit joint est appliqué contre la face inférieure du piston 12, de manière à assurer son étanchéité dans la douille cylindrique 11, et une position inférieure, dans laquelle le joint torique 14 est retenu par les ergots 13. Sont également venues de moulage avec la face supérieure du piston 12 en forme de disque, quatre nervures, 15 (voir aussi la figure 2) ; ces nervures 15 s'étendent au-dessus du piston 12 à travers les chambres délimitées respectivement par les étages 3 et 2, et leurs extrémités supérieures sont solidaires, comme visible sur la figure 2, d'une bague cylindrique 16, montée librement coulissante dans l'étage 2 avec interposition d'un joint d'étanchéité torique 17 ; dans la chambre délimitée par l'étage supérieur 1, la bague cylindrique 16 est prolongée par une jupe 18, munie, vers son extrémité supérieure, d'au moins une saillie radiale externe, 19. Les déplacements verticaux de la bague cylindrique 16 dans la chambre 2 sont limités, inférieurement et supérieurement, par la venue en butée des saillies radiales telles que 19 de sa jupe supérieure, 18, avec des butées annulaires, 20 et 21, formées sur la surface interne de la chambre 1. Un ressort hélicoïdal cylindrique, 22, de diamètre compris entre le diamètre intérieur de la chambre 3 et le diamètre extérieur de la douille cylindrique 11, est comprimé entre le fond annulaire de ladite chambre 3 d'une part, et la face inférieure de la bague cylindrique 16 d'autre part ; ce ressort 22 a pour effet de maintenir la bague 16 et les différentes pièces qui y sont suspendues, dans leurs positions respectives supérieures, illustrées sur la figure 1, pour lesquelles les saillies radiales, telles que 19, de la jupe 18 coopèrent avec la butée supérieure 21 de l'étage 1.

Dans la zone de raccordement entre la face supérieure de la bague cylindrique 16 et sa jupe supérieure 18, est prévu un épaulement intérieur 23, sur lequel prend appui l'extrémité inférieure, ouverte, d'un tube de verre, 24, ou d'autre matière transparente, constituant la partie supérieure B de la came ; le tube 24 est engagé avec serrage ou colle dans la jupe 18. La longueur du tube de verre 24 est choisie de préférence suffisante pour que, quand la canne est appliquée par ses pattes 10a à 10d sur le sol S, l'extrémité supérieure du tube 24 se trouve à une hauteur suffisante du sol pour qu'un utilisateur de taille moyenne puisse, sans se baisser, tenir dans sa main un pommeau p surmontant ledit tube 24. Dans la forme de réalisation considérée, ce pommeau, réalisé par exemple en matière moulée et rigide, est formé de deux parties hémisphériques : une partie inférieure, 25a, prolongée vers le bas par une jupe 25b, engagée avec serrage ou colle autour de l'extrémité supérieure du tube de verre 24 ; une partie hémisphérique supérieure, 25c, qui est traversée par une prise d'air 26, et qui peut être assujettie sur la partie hémisphérique inférieure, 25a, par exemple au moyen de jupes cylindriques filetées, 27a et 27c, ou bien par encliquetage.

Lorsqu'il a placé la canne précédemment décrite au-dessus de la plante P à traiter, l'utilisateur n'a plus qu'à pousser vers le bas le pommeau p qu'il tient dans l'une de ses mains ; le tube de verre 24 transmet cette poussée descendante à la bague cylindrique 16, qui la transmet elle-même, par l'intermédiaire des nervures 15, au piston 12 en forme de disque, qui occupe alors sa position supérieure de repos dans la douille cylindrique 11. En descendant, le piston 12 entraîne vers le bas le joint torique 14, que la contre-pression du liquide remplissant la douille cylindrique 11 applique contre la face inférieure dudit piston plat 12 ; l'étanchéité latérale de ce dernier étant assurée, il refoule dans la chambre 4 le liquide contenu dans la douille cylindrique 11, et la surpression ainsi créée dans ladite chambre 4 provoque l'ouverture de l'obturateur 6. Lorsqu'il a accompli sa course complète de refoulement, c'est-à-dire qu'il est parvenu à proximité de l'extrémité inférieure de la douille cylindrique 11, le piston 12 a refoulé dans la chambre 4 une quantité de liquide sensiblement égale à la cylindrée de la pompe à piston, et le même volume de liquide a été éjecté hors de la chambre 4, à travers l'orifice 5, vers la plante P. Dans l'exemple de réalisation illustré, l'utilisateur peut continuer à pousser vers le bas le pommeau p et le tube 24 jusqu'à ce que les saillies radiales, telles que 19, de la jupe 18 viennent contre la butée inférieure 20 de l'étage 1. Dans ce cas, le piston 12, après être parvenu à l'extrémité inférieure de la douille cylindrique 11, poursuit sa course vers le bas dans la chambre 4 ; comme cependant il s'établit un équilibre de pression entre les chambres 3 et 4, à travers la douille cylindrique 11, entièrement dégagée, le ressort 8 referme l'obturateur 6, ce qui évite que la plante P ne reçoive un volume de liquide supérieur à la valeur déterminée. Lorsque l'utilisateur cesse de pousser le pommeau p vers le bas, le ressort 22, en se détendant, repousse la bague cylindrique 16 et sa jupe 18 jusqu'à leurs positions supérieures, illustrées sur la figure 1. Peu avant la fin de ce mouvement ascendant, le piston 12 s'engage à nouveau dans l'extrémité inférieure de la douille cylindrique 11, mais le frottement de glissement maintient le joint torique 14 dans sa position inférieure, où il est retenu par les ergots 13 ; dans cette position du joint 14, le liquide contourne le piston 12 et ledit joint 14, si bien que la course de retour du piston 12 ne produit aucun refoulement de liquide vers la chambre 3. Le remplissage du tube 24, servant de réservoir, avec le liquide de traitement, a lieu après avoir détaché la partie supérieure hémisphérique, 25c, du pommeau p ; sa partie inférieure, 25a, forme alors entonnoir.

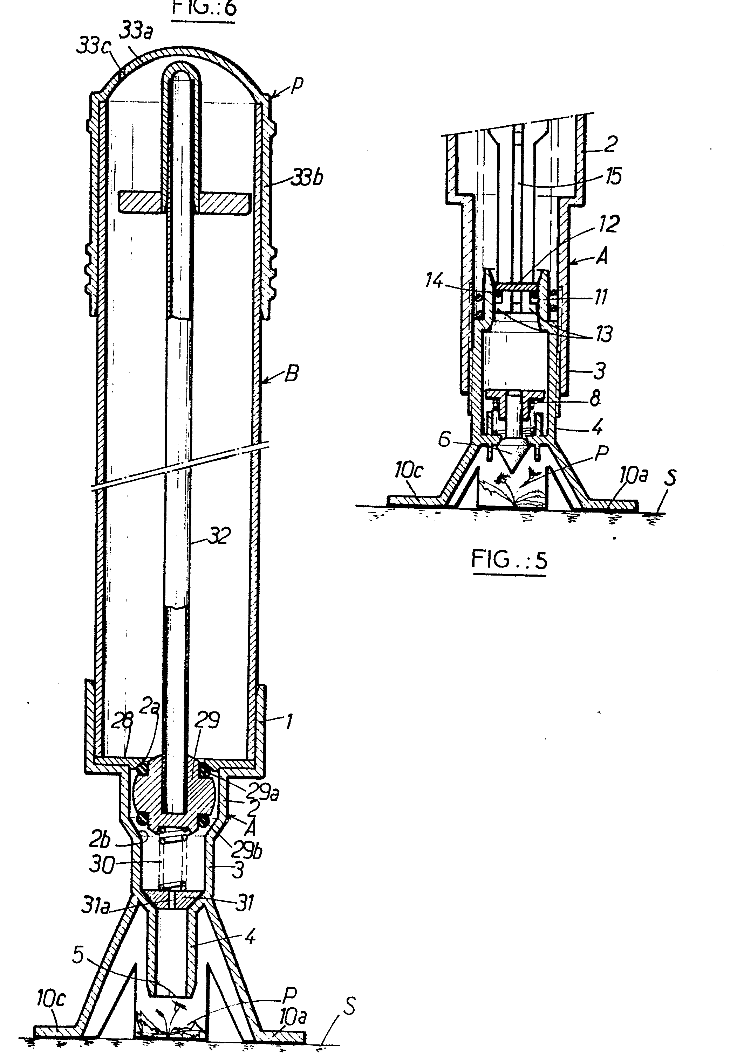

La variante illustrée partiellement sur la figure 5 ne diffère de la forme de réalisation précédemment décrite que par le fait que l'étage 4 est matérialisé par une douille cylindrique, qui est vissée à l'intérieur de l'étage 3, et qui est prolongé vers le haut par la douille cylindrique 11, formant le cylindre de la pompe à piston 12. Ce dernier étant représenté sur la figure 5 dans sa position supérieure de repos, on comprend que, en modifiant le degré d'enfoncement de la douille 4 dans le tube 3, par vissage ou dévissage, on peut ajuster la position de la douille cylindrique 11 par rapport à la position de repos, fixe, du piston 12. Ceci permet donc d'ajuster la course utile du piston 12, et par suite, la cylindrée de la pompe à piston, à laquelle correspond la dose de liquide éjectée à chaque actionnement de l'appareil.

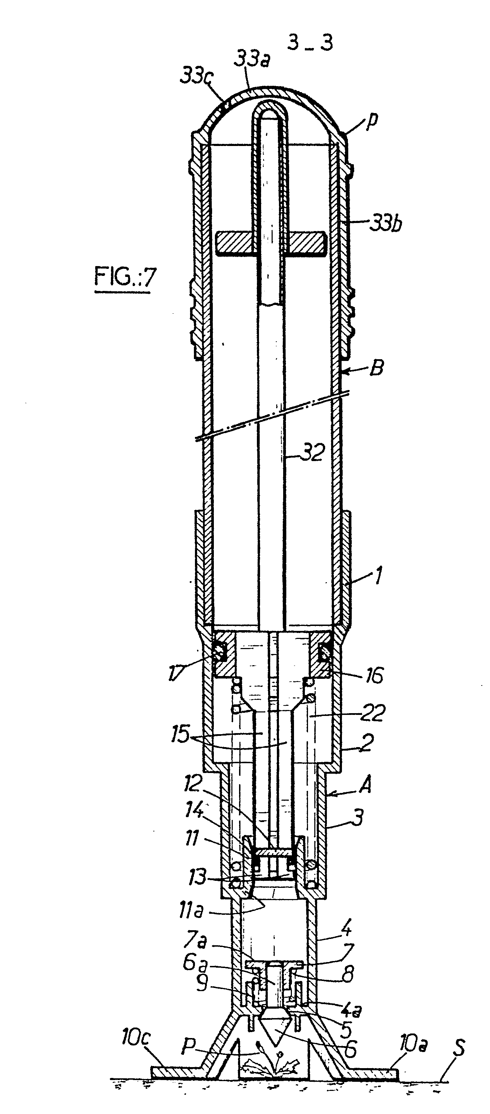

Dans la forme de réalisation de l'invention qui est illustrée schématiquement sur la figure 6, la partie inférieure A, constituée, dans cet exemple, également par une pièce moulée à quatre étages superposés, 1 à 4, de sections transversales décroissantes vers le bas, et sa partie supérieure B, constituée par un tube de verre ou d'autre matière transparente, formant réservoir, sont solidarisées l'une avec l'autre au niveau de l'étage 1, dans lequel l'extrémité inférieure du tube B est par exemple soudée avec interposition d'une plaque annulaire 28, au centre de laquelle est aménagé un siège supérieur, 2a, dont l'orifice fait communiquer l'intérieur du tube B avec la chambre délimitée par l'étage 2. La zone annulaire de raccord entre les étages 2 et 3 forme intérieurement un siège 2b pour un obturateur double, 29. Dans l'exemple illustré, il s'agit d'un obturateur sphérique, sur lequel deux joints toriques, 29a et 29b, sont encastrés de manière à venir coopérer respectivement avec les sièges 2a et 2b. Un ressort hélicoïdal 30 est comprimé, dans l'étage 3, entre une cloison transversale 31, perforée en son centre en 31a, et une cuvette aménagée dans la partie inférieure de l'obturateur 29. Le ressort 30 maintient ce dernier normalement dans sa position supérieure, illustrée sur la figure 6, où son joint 29a est appliqué contre le siège 2a. De la partie supérieure de l'obturateur 29 part une tige rigide, par exemple un tube creux, 32, qui s'étend jusqu'à l'extrémité supérieure du tube de verre B, un peu en dessous de la calotte supérieure 33a d'un pommeau p, par exemple en matière synthétique moulée, dans la jupe cylindrique, 33b, duquel est engagée l'extrémité supérieure du tube B.

La longueur de la tige 32 est choisie pour que l'utilisateur, tenant le pommeau de la canne dans une main, puisse pousser vers le bas sa calotte souple 33a, par exemple avec le pouce, de manière que celle-ci pousse à son tour vers le bas la tige 32, de manière à écarter l'obturateur 29 de son siège supérieur 2a et à l'appliquer contre son siège inférieur 2b. L'espace compris entre la paroi de l'étage 2 et l'obturateur cylindrique 29 se remplit alors d'un volume de liquide qui, pour un dimensionnement approprié de ces pièces, correspond à la dose de liquide à éjecter sur la plante P. Lorsque l'utilisateur relâche la calotte déformable 33a du pommeau, elle reprend sa forme visible sur la figure 6, et le ressort 30, en se détendant, ramène l'obturateur 29 dans sa position supérieure, où il obture le siège 2a et dégage le siège 2b ; la dose de li- liquide contenue dans la chambre 2 s'écoule alors par gravité dans la chambre 3, puis, de là, par l'orifice central 31a de la cloison transversale 31, dans l'orifice d'éjection 5 de la tubulure 4.

Bien entendu, un orifice de prise d'air, 33c, est prévu dans la calotte 33a du pommeau.

La présente invention n'est pas limitée aux formes de réalisation précédemment décrites ; elle englobe toutes leurs variantes. Les deux formes de réalisation précédemment décrites se distinguent d'une part par leurs dispositifs respectifs de dosage du liquide à éjecter, et, d'autre part, par leurs organes de commande et par les moyens de transmission insérés entre ces organes de commande et les organes mobiles des dispositifs de dosage correspondants. Il est évident pour l'homme de l'art que le dispositif de dosage de chacune des deux formes de réalisation décrites pourrait être commandé à l'aide de l'organe de commande de l'autre forme de réalisation, avec interposition des moyens de transmission qui lui sont associés. C'est ainsi que la forme de réalisation illustrée sur la figure 7 résulte de la combinaison de la partie supérieure de la réalisation de la figure 6 avec la partie inférieure de la réalisation de la figure 1 ; on voit sur la figure 7 que l'extrémité inférieure de la tige 32 est accouplée avec le piston 12 de la pompe à piston, qui est analogue à celle représentée sur la figure 1. La pompe à piston est elle-même susceptible de réalisations différentes de celle illustrée et décrite. Les moyens pour ajuster la cylindrée de la pompe à piston, et en particulier la course de refoulement de son piston, sont eux-mêmes matière à options. L'organe d'appui sur le sol, dont est pourvue l'extrémité inférieure de la canne creuse, peut comporter un nombre variable de pattes ; il peut aussi être remplacé par un tronc de cône en tôle, pleine, ou de préférence ajourée, ou encore par un tronc de cône en fil de fer, pour faciliter la mise en place de la canne au-dessus de la plante à traiter.

Enfin, le dispositif de dosage et d'.éjection est susceptible de réalisations différentes de celles précédemment
décrites ; il en va de même de l'organe d'actionnement de
ce dispositif, qui, tout en étant de préférence disposé
au niveau du pommeau de la canne, est susceptible de réalisations diverses, telles qu'un bouton-poussoir, une gâchette..etc. Un dispositif de commande électrique, ou en
particulier électromagnétique, est également possible
dans le cadre de la présente invention.

## REVENDICATIONS DE BREVET

1. Appareil pour l'application manuelle et localisée d'un liquide de traitement des plantes, par exemple un désherbant, comportant une canne (A-B) portant un ré- servoir de liquide, muni, à son extrémité inférieure, d'un orifice d'éjection (5), ainsi que d'un organe d'appui sur le sol (S), grâce auquel ledit orifice (5) peut être placé au-dessus de la plante (P) à traiter, ainsi qu'un dispositif placé en amont dudit orifice (5) pour doser et éjecter un volume déterminé de liquide chaque fois qu'une poussée descendante est exercée manuellement sur le pommeau (p) de ladite canne, caractérisé en ce que le réservoir de liquide est constitué par au moins une partie creuse (B) de la canne, que le dispositif pour doser un volume déterminé de liquide comporte une pompe à piston (11-12), dont la cylindrée est sensiblement égale au volume de liquide à doser, le piston (12) de ladite pompe étant accouplé au pommeau (p) de la canne de façon que chaque poussée descendante sur ledit pommeau (p) produise une course de refoulement complète dudit piston (12), et que des moyens élastiques (22) sont prévus pour commander la course de retour du piston (12).

2. Appareil selon la revendication 1, caractérisé en ce que des moyens sont prévus pour ajuster la cylindrée de la pompe, et en particulier la course de refoulement de son piston (12), le cylindre (11) de ladite pompe, ou le support (4) de son cylindre (11), étant par exemple monté de façon à pouvoir être ajusté axialement par rapport à la position de repos, fixe, de son piston (12).

3. Appareil selon la revendication 2, caractérisé en ce que le cylindre (11) de la pompe, ou son support (4) est vissé dans un filetage intérieur de la canne creuse (A-B), notamment de sa partie inférieure (A).

4. Appareil selon l'une quelconque des revendications 1 à 3, caractérisé en ce que le cylindre (11) de la pompe, qui est monté coaxialement à l'intérieur de la canne creuse (A-B), en dessous de son réservoir supérieur de liquide (B), débouche, par une ouverture inférieure, dans une chambre (4), qui est aménagée dans la partie inférieure (A) de ladite canne (A-B), et qui alimente l'orifice d'échappement (5), contrôlé lui-même par un obturateur (6), muni d'un ressort de fermeture (8).

5. Appareil selon la revendication 4, caractérisé en ce que le joint d'étanchéité (14) du piston (12) est monté flottant de façon que, à chaque course de retour dudit piston (12), son joint (14) laisse passer le liquide qui s'écoule, par gravité, du réservoir supérieur (B) vers la chambre inférieure (4) en traversant le cylindre (11) de la pompe.

6. Appareil selon la revendication 1, caractérisé en ce que l'organe d'appui est ajouré pour faciliter la mise en place de la canne (A-B) au-dessus de la plante (P) à traiter, ledit organe étant formé par exemple par deux, trois ou quatre pattes (10a à 10d), disposées régulièrement à l'extrémité inférieure de la canne (A-B), ou bien par un tronc de cône ajouré, par exemple en fil de fer.

7. Appareil selon l'une quelconque des revendications 1 à 6, caractérisé en ce que le pommeau rigide, (p), de la canne creuse (A-B) est accouplé avec le piston (12) de la pompe de dosage par un tube (B), par exemple en matériau transparent, qui constitue le réservoir de liquide, et dont la partie inférieure est montée coulissante, avec étanchéité, dans la partie inférieure (A) de la canne creuse, et que des moyens élastiques (22) sont prévus pour maintenir normalement le tube creux (B) dans sa position d'extension maximale au-dessus de ladite partie inférieure (A), même lorsque le tube (B) est rempli de liquide.

8. Appareil selon la revendication 7, caractérisé en ce que le pommeau rigide (p) forme un bouchon pour une ouverture de remplissage du réservoir tubulaire (B), et comporte aussi, éventuellement, un orifice (26) de prise d'air, ledit pommeau (p) étant par exemple formé par deux hémisphères creux, dont l'un (25a) communique avec l'ouverture supérieure du réservoir tubulaire (B), tandis que l'autre hémisphère (25c) est vissé ou encliqueté sur le premier.

9. Appareil selon l'une quelconque des revendications 1 à 6, caractérisé en ce que le pommeau, souple, de la canne creuse, ou tout au moins sa calotte supérieure (33a), souple, permet, par sa déformation manuelle, de pousser vers le bas une tige (32), disposée suivant l'axe de ladite canne (A-B), et accouplée par son extrémité inférieure avec le piston (12) de la pompe de dosage, et que des moyens élastiques (30) sont prévus pour maintenir normalement la tige axiale (32) dans sa position supérieure.

FIG.:1

FIG.:2

FIG.:3

FIG.:4

0084486

1 _ 3

FIG.:6

FIG.:5

0084486

2 _ 3

FIG.:7

3 - 3

0084486

Office européen
des brevets

**RAPPORT DE RECHERCHE EUROPEENNE**

**0084486**
Numéro de la demande

EP    83   40   0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,Y | CA-A- 908 107 (E.C.BROWN) *Page 1, lignes 1-28; revendications 1-3; figures 1-4* | 1,6 | A 01 M  21/04 |
| Y | GB-A- 818 261 (D.P.H.JOSEPHS) *Page 1, ligne 76 - page 2, ligne 8; figure* | 1,4-5, 7 | |
| D,A | FR-A-2 333 408 (WILHELM KELLER KG) *Page 4, ligne 36 - page 7, ligne 7; figure* | 8 | |
| D,A | DE-B-2 807 956 (WILHELM KELLER KG) *En entier* | 8 | |
| A | DE-C- 831 784 (A.GELZHÄKSER) | | A 01 M |
| A | GB-A- 515 376 (C.S.GURTEEN) | | |

DOMAINES TECHNIQUES RECHERCHES (Int. Cl. 3)

Le présent rapport de recherche a été établi pour toutes les revendications

| Lieu de la recherche | Date d'achèvement de la recherche | Examinateur |
|---|---|---|
| LA HAYE | 02-03-1983 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82